# EUROPÄISCHE PATENTSCHRIFT

(11) **EP 0 960 043 B1**
(45) Veröffentlichungstag und Bekanntmachung des Hinweises auf die Patenterteilung: **18.05.2005**
(21) Anmeldenummer: 98912307.0
(22) Anmeldetag: 13.02.1998
(51) Int. Cl.: B60T 8/44

(54) **HYDRAULISCHE BREMSANLAGE**
HYDRAULIC BRAKING DEVICE
SYSTEME DE FREIN HYDRAULIQUE

(30) Priorität: 14.02.1997 DE 19705653
(43) Veröffentlichungstag der Anmeldung: 01.12.1999
(73) Patentinhaber: Continental Teves AG & Co. oHG, 60488 Frankfurt (DE)
(72) Erfinder: BÖHM, Peter, D-61381 Friedrichsdorf (DE); BECK, Erhard, D-35781 Weilburg (DE)
(74) Vertreter: Portwich, Peter
(86) Internationale Anmeldenummer: PCT/EP1998/000829
(87) Internationale Veröffentlichungsnummer: WO 1998/035867

(56) Entgegenhaltungen:
- EP-A- 0 422 457
- EP-A- 0 436 926
- EP-A- 0 485 367
- EP-A- 0 800 975
- EP-A- 0 827 887
- WO-A-96/14228
- DE-A- 19 501 760
- US-A- 5 709 438
- PATENT ABSTRACTS OF JAPAN vol. 095, no. 011, 26.Dezember 1995 & JP 07 228243 A (TOYOTA MOTOR CORP), 29.August 1995,
- PATENT ABSTRACTS OF JAPAN vol. 096, no. 007, 31.Juli 1996 & JP 08 067244 A (JIDOSHA KIKI CO LTD), 12.März 1996,

## Beschreibung

Die Erfindung betrifft eine hydraulische Bremsanlage für ein Kraftfahrzeug, mit einem Antiblockiersystem, das mit einer hydraulischen Pumpe und einem Bremskraftverstärker versehen ist, sowie ein Verfahren zum Betreiben einer derartigen Bremsanlage.

Eine hydraulische Bremsanlage mit Antiblockiersystem ist bei vielen modernen Kraftfahrzeugen serienmäßig eingebaut. Als Bremskraftverstärker wird dabei häufig ein Vakuumverstärker verwendet, dessen Unterdruck mit Hilfe des Ansaugdrucks der Brennkraftmaschine erzeugt wird. Das Antiblockiersystem weist üblicherweise eine hydraulische Pumpe auf.

Aufgrund von Weiterentwicklungen der Brennkraftmaschinentechnik wird es zukünftig nicht mehr ohne weiteres möglich sein, den Ansaugdruck der Brennkraftmaschine für den Betrieb des Vakuumverstärkers zu verwenden. Stattdessen wird es erforderlich werden, dem Vakuumverstärker eine separate Vakuumpumpe zuzuordnen. Bei einer derartigen Vakuumpumpe ist jedoch das Risiko eines Ausfalls größer als bisher, mit der Folge, daß das Risiko eines Ausfalls des Bremskraftverstärkers ebenfalls größer wird. Der Ausfall des Bremskraftverstärkers kann jedoch die Durchführung eines Bremsvorgangs wesentlich erschweren oder gar unmöglich machen.

Aus der WO-A-96/14228 ist ein Verfahren zum Betreiben einer hydraulischen Bremsanlage mit einem Antiblockiersystem umfassend eine hydraulische Pumpe und einen fahrerunabhängig ansteuerbaren Bremskraftverstärker bekannt. Es wird eine Ansteuerlogik für die im Hydroaggregat enthaltenen Ventile sowie den fahrerunabhängig ansteuerbaren Bremskraftverstärker zur Ermöglichung von Aktivbremsvorgängen zwecks Fahrstabilitätsregelung vorgelegen. Dabei wird beim Eintritt in die Regelung der Bremskraftverstärker - unabhängig vom Fahrerwillen - voll ausgesteuert, und die gewünschten Radbremsdrücke werden mit Hilfe der Pumpe eingesteuert. Die Vorladung durch den Bremskraftverstärker ermöglicht, daß eine konstruktive Änderung der Rückförderpumpe in Hinblick auf deren Verhalten bei tiefen Temperaturen überflüssig ist.

Aufgabe der Erfindung ist es, eine hydraulische Bremsanlage bzw. ein Verfahren zum Betreiben derselben zu schaffen, bei der bzw. dem auch bei einem Ausfall des Bremskraftverstärkers die Durchführung eines Bremsvorgangs weiterhin gewährleistet bleibt.

Diese Aufgabe wird bei einer Bremsanlage der eingangs genannten Art gelöst, indem ein Notbremssystem mit Mitteln zum Erkennen eines Ausfalls des Bremskraftverstärkers sowie mit Ventilen zum Verbinden einer Saugseite der Pumpe mit einem Hauptzylinder vorgesehen ist, um die Pumpe nach einem Ausfall des Bremskraftverstärkers zur Erzeugung einer Bremskraft zu verwenden. Verfahrenstechnisch wird vorgeschlagen, dass ein Ausfall des Bremskraftverstärkers erkannt wird, und dass ein Ventil geschaltet wird, um die Pumpe zur Erzeugung einer Bremskraft zu verwenden.

Erfindungsgemäß wird also nach einem erkannten Ausfall des Bremskraftverstärkers der von der Pumpe erzeugte hydraulische Druck dazu verwendet, den Bremsvorgang durchzuführen. Der wesentliche Vorteil dieser Vorgehensweise besteht darin, dass der erforderliche Bremsdruck nunmehr von der Pumpe zur Verfügung gestellt wird. Es wird somit gewährleistet, dass trotz des Ausfalls des Bremskraftverstärkers der Bremsvorgang durchgeführt und abgeschlossen werden kann. Der Ausfall des Bremskraftverstärkers kann also in keinem Fall zur Folge haben, dass der Bremsvorgang unmöglich wird. Die Erfindung stellt somit ein Notbremssystem zur Verfügung, das auf eine einfache Weise mit Hilfe von vorhandenen Bauteilen einen sicheren Bremsvorgang auch nach einem Ausfall des Bremskraftverstärkers gewährleistet.

Der Ausfall des Bremskraftverstärkers wird vorzugsweise mittels eines Sensors, insbesondere eines Drucksensors, oder Schalters erkannt. Dieses Mittel schaltet ab einem bestimmten Schwellenwert die Pumpe an, wodurch die Bremskraft erzeugt wird. Erfindungsgemäß ist es ebenfalls möglich, dass die Pumpe durch den Sensor oder Schalter wieder abgeschaltet wird, sobald von ihr ein bestimmter Druck aufgebaut worden ist bzw. über einen Wegsensor bzw. -schalter der Wunsch des Fahrers erkannt worden ist, den Bremsvorgang zu beenden.

Bei einer vorteilhaften Ausgestaltung der Erfindung wird die Pumpe nach einem erkannten Ausfall des Bremskraftverstärkers von dem Bremslichtschalter ein- und ausgeschaltet. Die Pumpe wird also nicht permanent nach dem Erkennen des Ausfalls des Bremskraftverstärkers eingeschaltet, sondern nur dann, wenn ein Bremsvorgang tatsächlich stattfinden soll. Ein derartiger Bremsvorgang wird dabei in einfacher Weise mit Hilfe des vorhandenen Bremslichtschalters erkannt. Das erfindungsgemäße Notbremssystem wird somit nur dann aktiviert, wenn ein Bremsvorgang nach einem Ausfall des Bremskraftverstärkers stattfindet.

Bei einer vorteilhaften Weiterbildung der Erfindung ist ein Ventil vorgesehen, mit dem die Druckseite der Pumpe nach einem Ausfall des Bremskraftverstärkers von dem Hauptbremszylinder trennbar ist. Damit wird erreicht, dass die Pumpe den Druck gezielt in Richtung der Räder aufbaut und nicht in Richtung des Hauptbremszylinders.

Besonders vorteilhaft ist es dabei, wenn mindestens eines der beiden Ventile ein Bestandteil einer Antriebsschlupfregelsystems ist. Die beiden Ventile müssen in diesem Fall nicht zusätzlich in die Bremsanlage eingebaut werden, sondern es können die bereits vorhandenen Ventile der Antriebsschlupfregelung verwendet werden. Insbesondere die Kosten der erfindungsgemäßen Bremsanlage werden dadurch verringert.

Des weiteren ist es besonders zweckmäßig, wenn als Ventil ein gegen Hochdruck öffnendes, elektrisches Umschaltventil vorgesehen ist.

Bei einer weiteren Ausgestaltung der Erfindung bleibt die Pumpe nach einem erkannten Ausfall des Bremskraftverstärkers eingeschaltet, so daß durch die Antiblockierregelung ein Blockieren der Räder verhindert wird. Ist also ein Ausfall des Bremskraftverstärkers erkannt worden, wird erfindungsgemäß die Pumpe eingeschaltet. Die Pumpe läuft dann während des gesamten Bremsvorgangs weiter.

Dies hat zur Folge, daß der Bremsdruck auf die Räder immer größer wird, mit der Folge, daß irgendwann die Räder zu blockieren beginnen. In diesem Moment setzt die Antiblockierregelung ein und regelt den Bremsdruck gerade so, daß ein Blockieren der Räder gerade noch verhindert wird. Diese Vorgehensweise gewährleistet einen maximalen Bremsvorgang trotz des ausgefallenen Bremskraftverstärkers. Gleichzeitig wird gewährleistet, daß bei dem Bremsvorgang kein Blockieren der Räder des Kraftfahrzeugs auftritt.

Bei einer anderen vorteilhaften Ausgestaltung der Erfindung wird nach einem, insbesondere mittels eines Drucksensors erkannten, Ausfall des Bremskraftverstärkers der Druck nach dem Hauptzylinder und der Druck auf der Druckseite der Pumpe gemessen und in Abhängigkeit davon die Pumpe ein- und ausgeschaltet. Die Pumpe bleibt also nicht während des gesamten Bremsvorgangs eingeschaltet, sondern es wird die Pumpe dann ausgeschaltet, wenn der von der Pumpe erzeugte Bremsdruck etwa dem bei dem Bremsvorgang erwünschten Bremsdruck entspricht. Letzterer kann dabei aus dem nach dem Bremskraftverstärker gemessenen Druck abgeleitet werden. Diese Vorgehensweise hat den Vorteil, daß der Bremsdruck nicht immer weiter ansteigt und erst durch die Antiblockierregelung begrenzt wird, sondern es wird schon vorher durch das Abschalten der Pumpe ein weiterer Druckanstieg vermieden. Auf diese Weise kann bei dem erfindungsgemäßen Notbremssystem ein hohes Maß an Komfort bei gleichzeitiger Sicherheit erreicht werden.

Bei einer vorteilhaften Weiterbildung der Erfindung sind zwei Bremskreise vorgesehen, die mit jeweils einer hydraulischen Pumpe versehen sind, wobei nach einem Ausfall des Bremskraftverstärkers beide Pumpen zur Erzeugung einer Bremskraft einsetzbar sind.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnungen dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.
- Figur 1: zeigt ein schematisches Blockschaltbild eines ersten Ausführungsbeispiels einer hydraulischen Bremsanlage für ein Kraftfahrzeug nach der Erfindung,
- Figur 2: zeigt ein schematisches Blockschaltbild eines zweiten Ausführungsbeispiels einer hydraulischen Bremsanlage für ein Kraftfahrzeug nach der Erfindung, und
- Figur 3: zeigt ein schematisches Blockschaltbild eines dritten Ausführungsbeispiels einer hydraulischen Bremsanlage für ein Kraftfahrzeug nach der Erfindung.

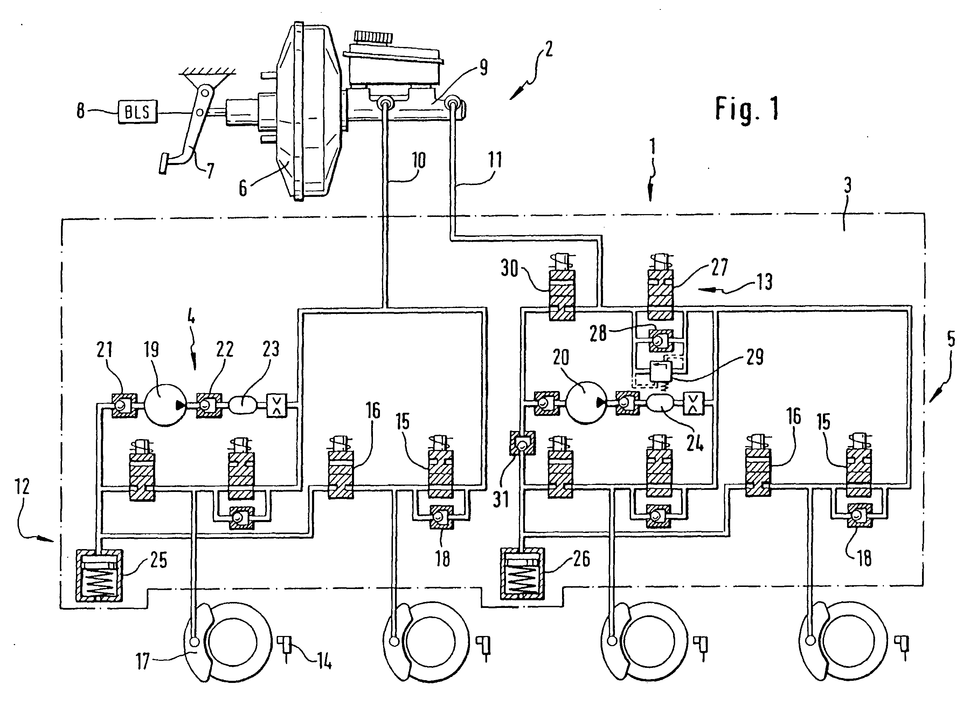

In der Figur 1 ist eine hydraulische Bremsanlage 1 für ein Kraftfahrzeug dargestellt, die eine Verstärkungseinheit 2 und eine Regelungseinheit 3 aufweist. Des weiteren ist die Bremsanlage 1 mit zwei Bremskreisen 4, 5 versehen.

Die Verstärkungseinheit 2 weist einen Bremskraftverstärker 6 auf, bei dem es sich in der gezeigten Ausführungsform um einen sogenannten Vakuumverstärker handelt. Es sind hier jedoch auch andere Verstärker, beispielsweise hydraulische Bremskraftverstärker, denkbar. Der dargestellte Verstärker 6 ist in nicht gezeigter Weise mit einer Einrichtung zur Erzeugung eines Unterdrucks verbunden, vorzugsweise mit einer Vakuumpumpe. Des weiteren ist in nicht dargestellter Weise dem Bremskraftverstärker 6 ein Drucksensor zugeordnet, der dazu geeignet ist, einen zu geringen Unterdruck und damit einen Ausfall des Bremskraftverstärkers zu melden. Der Bremskraftverstärker 6 ist dazu vorgesehen, daß ein von einem Benutzer erzeugter Bremsdruck mit Hilfe des Unterdrucks verstärkt wird.

Zur Erzeugung eines Bremsdrucks durch einen Benutzer ist ein Bremspedal 7 vorgesehen, das von dem Benutzer zur Durchführung eines Bremsvorgangs mit dem Fuß betätigt wird. Das Bremspedal 7 ist mit dem Bremskraftverstärker 6 gekoppelt. Des weiteren ist dem Bremspedal 7 ein Bremslichtschalter 8 zugeordnet, der während der Durchführung eines Bremsvorgangs ein nicht dargestelltes Bremslicht des Kraftfahrzeugs einschaltet.

An den Bremskraftverstärker 6 ist ein Tandemhauptzylinder 9 angeschlossen, der den Bremsdruck über die beiden Leitungen 10, 11 an die beiden Bremskreise 4, 5 weitergibt. In dieser Ausführungsform ist der Bremskreis 4 der Vorderachse und der Bremskreis 5 der Hinterachse des Kraftfahrzeugs zugeordnet.

Die Regelungseinheit 3 weist eine Antiblockiersystem 12 und ein Antriebsschlupfregelsystem 13 auf. Die Antiblockierregelung 12 ist dazu vorgesehen, ein Blockieren der Räder des Kraftfahrzeugs zu verhindern, während die Antriebsschlupfregelung 13 dazu vorgesehen ist, ein Durchdrehen der Räder zu vermeiden. Zur Durchführung dieser Regelungen ist jedem Rad des Kraftfahrzeugs ein Drehzahlsensor 14 zugeordnet.

Bei der Bremsanlage der Figur 1 ist die Antriebsschlupfregelung 13 nur in dem Bremskreis 5 vorgesehen. Die Bremsanlage 1 der Figur 1 ist deshalb vorzugsweise bei Kraftfahrzeugen mit einem auf die Hinterachse wirkenden Antrieb vorgesehen.

Bei der Antiblockierregelung 12 sind jedem Rad des Kraftfahrzeugs jeweils zwei vorzugsweise relaisgesteuerte Zweiwegeventile 15, 16 zugeordnet, die gegensinnig geschaltet sind. Die im nicht angesteuerten Zustand offenen Zweiwegeventile 15 sind einerseits an die Leitungen 10, 11 sowie andererseits an die Bremszylinder 17 der Räder angeschlossen. Des weiteren sind die Zweiwegeventile 15 durch jeweils ein Sperrventil 18 überbrückt.

Jeder der beiden Bremskreise 4, 5 ist mit einer hydraulischen Pumpe 19, 20 versehen, die jeweils zwei Sperrventile 21, 22 sowie eine Dämpfungskammer bzw. Hochdruckspeicher 23, 24 aufweisen. Die Druckseiten der Pumpen 19, 20 sind über die Dämpfungskammern 23, 24 an die Leitungen 10, 11 angeschlossen. Die Saugseiten der Pumpen 19, 20 sind mit den im nicht angesteuerten Zustand geschlossenen Zweiwegeventilen 16 sowie mit jeweils einem Ausgleichs- bzw. Niederdruckspeicher 25, 26 verbunden.

Für die Antriebsschlupfregelung 13 ist in dem Bremskreis 5 ein erstes Ventil 27 in den Weg von der Leitung 11 zu den beiden Zweiwegeventilen 15 und der Dämpfungskammer 24 zwischengeschaltet. Bei dem ersten Ventil 27 handelt es sich vorzugsweise um ein relaisgesteuertes Zweiwegeventil, das in seinem nicht angesteuerten Zustand offen ist. Das erste Ventil 27 ist durch ein Sperrventil 28 und ein Überdruckventil 29 überbrückt.

Des weiteren ist ein zweites Ventil 30 vorgesehen, das in den Weg von der Leitung 11 zu der Saugseite der Pumpe 20 bzw. zu den beiden Zweiwegeventilen 16 und dem Ausgleichsspeicher 26 zwischengeschaltet ist. Bei dem zweiten Ventil 30 handelt es sich insbesondere um ein relaisgesteuertes, gegen Hochdruck öffnendes Zweiwegeventil, das in seinem nicht angesteuerten Zustand geschlossen ist.

Zwischen das zweite Ventil 30 und die beiden Zweiwegeventile 16 bzw. den Ausgleichsspeicher 26 ist nach der Verzweigung zur Pumpe 20 ein Sperrventil 31 geschaltet. Dies ist erforderlich, um die Pumpe 20 auf ihrer Saugseite druckfest zu machen.

Ist der Bremskraftverstärker 6 voll funktionsfähig, so wird der von dem Benutzer bzw. Fahrer erzeugte Druck auf das Bremspedal 7 von dem Bremskraftverstärker 6 verstärkt. Der verstärkte Bremsdruck wird von dem Tandemhauptzylinder 9 an die beiden Bremskreise 4, 5 weitergegeben. Dort gelangt der Bremsdruck über die Leitungen 10, 11, das geöffnete erste Ventil 27 und die geöffneten Zweiwegeventile 15 zu den Bremszylindern 17 der Räder. Das zweite Ventil 30 ist geschlossen. Dies hat eine Bremswirkung und damit eine Verzögerung des Kraftfahrzeugs zur Folge. Wird der Bremsdruck zu groß und beginnen dadurch die Räder zu blockieren, so setzt die Antiblockierregelung 12 ein und regelt den Bremsdruck gerade so, daß ein Blockieren der Räder nicht stattfindet.

Beginnen bei einem Beschleunigungsvorgang die Räder des Kraftfahrzeugs durchzudrehen, weil beispielsweise die Straßenoberfläche vereist ist, so wird dies von der Antriebsschlupfregelung 13 erkannt. Die beiden Ventile 27 und 30 werden in ihren angesteuerten Zustand umgeschaltet, so daß das erste Ventil 27 geschlossen und das zweite Ventil 30 geöffnet ist. Des weiteren wird die Pumpe 20 eingeschaltet. Dies hat zur Folge, daß ein Bremsdruck auf die Bremszylinder 17 der beiden Räder der zu dem Bremskreis 5 gehörenden Hinterachse aufgebaut wird. Die Räder werden dadurch abgebremst und das Durchdrehen der Räder der Hinterachse wird beendet. Die beiden Ventile 27, 30 werden anschließend wieder in ihren nicht angesteuerten Zustand zurückgeschaltet und die Pumpe 20 wird ausgeschaltet.

Ein Ausfall des Bremskraftverstärkers 6 wird mit Hilfe des dem Bremskraftverstärker zugeordneten, nicht dargestellten Drucksensors festgestellt. Des weiteren wird ein Bremsvorgang vorzugsweise mit Hilfe des Bremslichtschalters 8 festgestellt. Sind insbesondere beide Bedingungen erfüllt, soll also ein Bremsvorgang bei ausgefallenem Bremskraftverstärker 6 durchgeführt werden, so geschieht dies letztendlich dadurch, daß dieselben Funktionen durchgeführt werden wie bei einem Durchdrehen der Räder des Kraftfahrzeugs.

Es wird also die Pumpe 20 eingeschaltet und die beiden Ventile 27, 30 werden in ihren angesteuerten Zustand umgeschaltet. Dies hat zur Folge, daß ein Bremsdruck auf die Räder der dem Bremskreis 5 zugeordneten Hinterachse aufgebaut wird. Dieser Bremsdruck steigt immer weiter an und hat somit eine Bremswirkung auf die Räder der Hinterachse zur Folge. Irgendwann beginnen jedoch die Räder zu blockieren. In diesem Moment setzt die Antiblockierregelung 12 ein und regelt den Bremsdruck gerade so, daß ein Blockieren der Räder vermieden wird.

Insgesamt entsteht somit eine Bremswirkung, die völlig unabhängig von dem vom Benutzer erzeugten Druck auf das Bremspedal 7 ist, sondern die nur von der Pumpe 20 und der Antiblockierregelung 12 abhängig ist. Diese Bremswirkung auf die beiden Räder der Hinterachse wird so lange aufrechterhalten, wie der Benutzer einen Druck auf das Bremspedal 7 ausübt.

Ist in einem Kraftfahrzeug, wie in der Figur 1 dargestellt, eine Antriebsschlupfregelung 13 enthalten, so ist es gegebenenfalls nur notwendig, daß das zweite Ventil 30, das ohne das beschriebene Notbremssystem häufig als hydraulisches Umschaltventil ausgestaltet ist, in das beschriebene elektrische, gegen Hochdruck öffnende Umschaltventil geändert wird. Ist in einem Kraftfahrzeug noch keine Antriebsschlupfregelung 13 enthalten, so kann das beschriebene Notbremssystem mit Hilfe des ersten und des zweiten Ventils 27, 30 in die Bremsanlage 1 integriert werden.

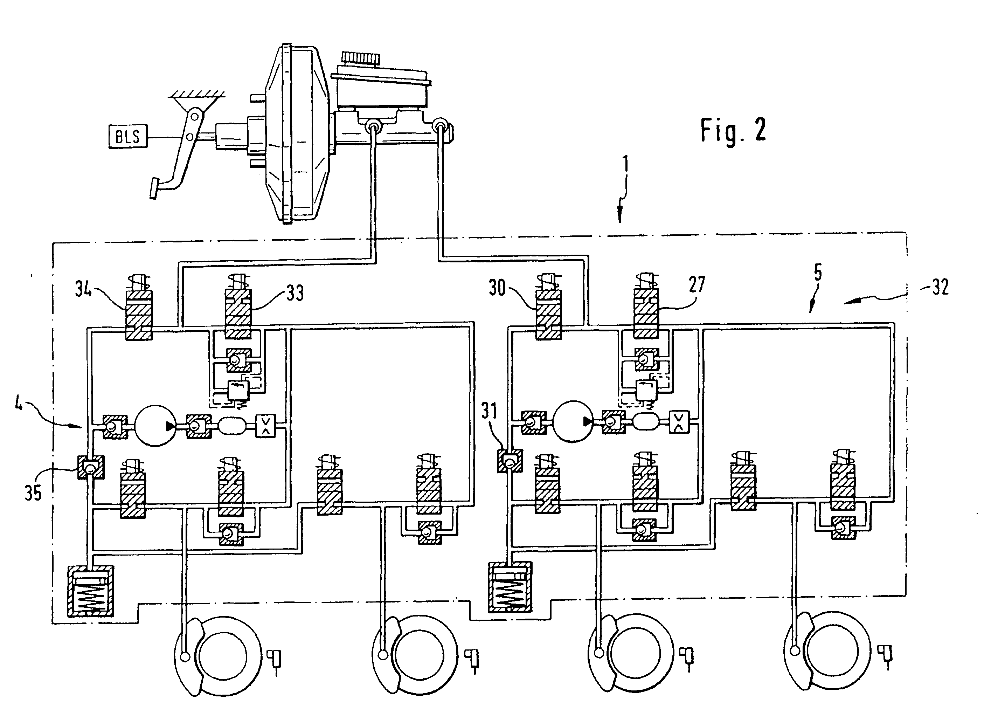

Die Figur 2 entspricht im wesentlichen der Figur 1. Aus diesem Grund sind übereinstimmende Bauteile mit gleichen Bezugsziffern gekennzeichnet. Nachfolgend werden die Unterschiede zwischen den Figuren 1 und 2 erläutert.

Bei der in der Figur 2 gezeigten Bremsanlage 1 ist eine Antriebsschlupfregelung 32 vorgesehen, die in beiden Bremskreisen 4, 5 vorhanden ist, und die damit auf alle vier Räder des Kraftfahrzeugs wirkt. Zu diesem Zweck sind ein drittes Ventil 33 und ein viertes Ventil 34 in den Bremskreis 4 eingebaut, die dem ersten und zweiten Ventil 27, 30 im Bremskreis 5 entsprechen. Des weiteren ist ein Sperrventil 35 im Bremskreis 4 vorgesehen, das dem Sperrventil 31 im Bremskreis 5 entspricht.

Bei dem dritten Ventil 33 handelt es sich vorzugsweise um ein relaisgesteuertes Zweiwegeventil, das in seinem nicht angesteuerten Zustand offen ist. Das dritte Ventil 33 ist durch ein Sperrventil und ein Überdruckventil überbrückt. Bei dem vierten Ventil 34 handelt es sich vorzugsweise um ein relaisgesteuertes, gegen Hochdruck öffnendes Zweiwegeventil, das in seinem nicht angesteuerten Zustand geschlossen ist.

Die Funktionsweise der Bremsanlage 1 der Figur 2 ist grundsätzlich gleich wie die Funktionsweise der Bremsanlage 1 der Figur 1. Der einzige Unterschied besteht darin, daß bei dem Notbremssystem der Figur 2 der Bremsdruck nach einem Ausfall des Bremskraftverstärkers 6 über die vier Ventile 27, 30, 33, 34 der beiden Bremskreise 4, 5 auf alle vier Bremszylinder 17 des Kraftfahrzeugs einwirkt. Das Kraftfahrzeug wird also über seine Vorderachse und seine Hinterachse abgebremst.

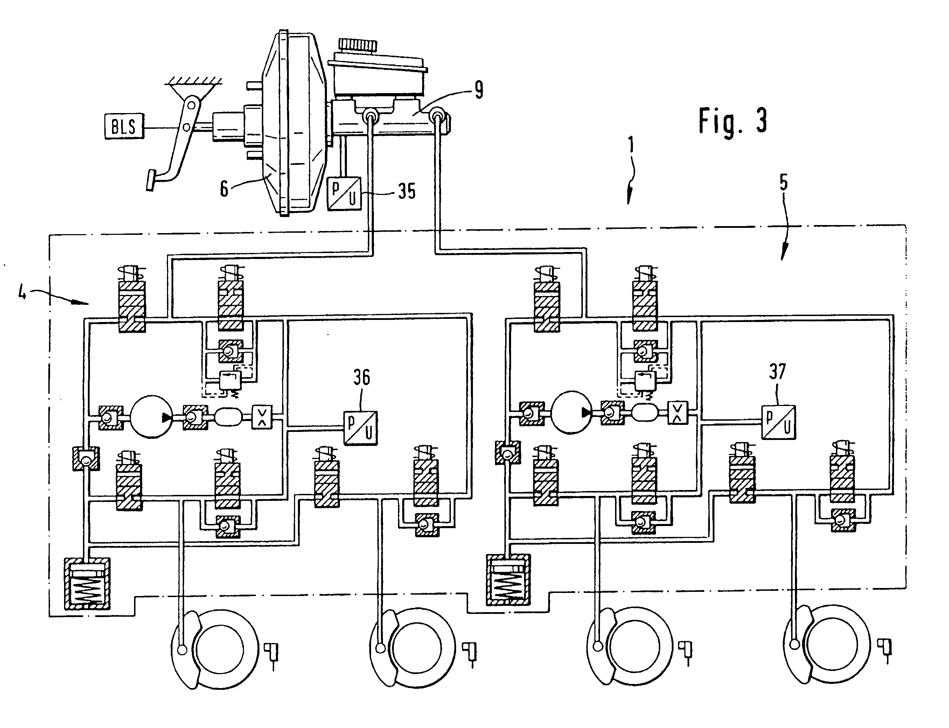

Die Figur 3 entspricht im wesentlichen der Figur 2. Aus diesem Grund sind übereinstimmende Bauteile mit gleichen Bezugsziffern gekennzeichnet. Nachfolgend werden die Unterschiede zwischen den Figuren 2 und 3 erläutert.

Bei der in der Figur 3 gezeigten Bremsanlage 1 ist ein Drucksensor 35 nach dem Bremskraftverstärker 6, beispielsweise in oder an dem Tandemhauptzylinder 9 vorgesehen. Des weiteren ist jeweils ein Drucksensor 36, 37 in den beiden Bremskreisen 4, 5 enthalten, die jeweils auf der Druckseite der beiden Pumpen 19, 20 angeordnet sind.

Nach einem Ausfall des Bremskraftverstärkers 6 wird während eines Bremsvorgangs der mit dem Drucksensor 35 gemessene Druck aus dem Tandemhauptzylinder 9 mit den gemessenen Drükken in den beiden Bremskreisen 4, 5 verglichen. Der Druck in dem Tandemhauptzylinder 9 stellt dabei einen Sollwert für den von dem Benutzer gewünschten Bremsdruck dar. Es werden dann die beiden Pumpen 19, 20 in den beiden Bremskreisen 4, 5 derart ein- und ausgeschaltet, daß die von den Drucksensoren 36, 37 in den beiden Bremskreisen 4, 5 gemessenen Drücke etwa dem von dem Benutzer gewünschten Bremsdruck entsprechen.

Die Funktionsweise der Bremsanlage 1 der Figur 3 ist grundsätzlich gleich wie die Funktionsweise der Bremsanlage 1 der Figur 2. Der einzige Unterschied besteht darin, daß bei dem Notbremssystem der Figur 3 der Bremsdruck nicht so lange ansteigt, bis er durch die Antiblockierregelung 12 begrenzt wird, sondern daß mit Hilfe der zusätzlichen Drucksensoren 35, 36, 37 die Pumpen 19, 20 schon vorher abeschaltet werden und damit der Bremsdruck auf den gewünschten Wert geregelt wird.

### Bezugszeichenliste:

- 1: Bremsanlage
- 2: Verstärkungseinheit
- 3: Regelungseinheit
- 4: Bremskreis
- 5: Bremskreis
- 6: Bremskraftverstärker
- 7: Bremspedal
- 8: Bremslichtschalter
- 9: Tandemhauptzylinder
- 10: Leitung
- 11: Leitung
- 12: Antiblockierregelung
- 13: Antischlupfregelung
- 14: Drehzahlsensor
- 15: Zweiwegeventile
- 16: Zweiwegeventile
- 17: Bremszylinder
- 18: Sperrventile
- 19: Pumpe
- 20: Pumpe
- 21: Sperrventile
- 22: Sperrventile
- 23: Dämpfungskammer
- 24: Dämpfungskammer
- 25: Ausgleichsspeicher
- 26: Ausgleichsspeicher
- 27: erstes Ventil
- 28: Sperrventil
- 29: Überdruckventil
- 30: zweites Ventil
- 31: Sperrventil
- 32: Antischlupfregelung
- 33: drittes Ventil
- 34: viertes Ventil
- 35: Drucksensor
- 36: Drucksensor
- 37: Drucksensor

## Patentansprüche

1. Hydraulische Bremsanlage (1) für ein Kraftfahrzeug, mit einem Antiblockiersystem (12), das mit einer hydraulischen Pumpe (19, 20) und einem Bremskraftverstärker (6) versehen ist, **gekennzeichnet durch** ein Notbremssystem mit Mitteln zum Erkennen eines Ausfalls des Bremskraftverstärkers (6) sowie Ventilen (30,34) zum Verbinden einer Saugseite der Pumpe (19,20) mit einem Hauptzylinder (9), um die Pumpe (19, 20) nach einem Ausfall des Bremskraftverstärkers (6) zur Erzeugung einer Bremskraft zu verwenden.

2. Bremsanlage (1) nach Anspruch 1, **dadurch gekennzeichnet, daß** die Pumpe (19, 20) nach einem Ausfall des Bremskraftverstärkers (6) durch einen Sensor oder Schalter (8) einschaltbar ist.

3. Bremsanlage (1) nach Anspruch 2, **dadurch gekennzeichnet, daß** die Pumpe (19, 20) nach einem Ausfall des Bremskraftverstärkers (6) durch einen Sensor oder Schalter (8) ausschaltbar ist.

4. Bremsanlage (1) nach Anspruch 2, **dadurch gekennzeichnet, daß** der Sensor oder Schalter (8) als Drucksensor ausgebildet ist.

5. Bremsanlage (1) nach Anspruch 2 oder 3, **dadurch gekennzeichnet, daß** die Pumpe (19,20) mittels eines Bremslichtschalters (8) schaltbar ist.

6. Bremsanlage (1) nach einem der vorhergehenden Ansprüche, **dadurch gekennzeichnet, daß** ein Ventil (27, 33) vorgesehen ist, mit dem die Druckseite der Pumpe (19, 20) nach einem Ausfall des Bremskraftverstärkers (6) von dem Hauptzylinder (9) trennbar ist.

7. Bremsanlage (1) nach Anspruch 1 oder 6, **dadurch gekennzeichnet, daß** mindestens eines der beiden Ventile (27, 30; 33, 34) ein Bestandteil eines Antriebsschlupfregelsystems (13) ist.

8. Bremsanlage (1) nach einem der Ansprüche 6 bis 7, **dadurch gekennzeichnet, daß** als Ventil (27, 30; 33, 34) ein gegen Hochdruck öffnendes, elektrisches Umschaltventil vorgesehen ist.

9. Bremsanlage (1) nach einem der Ansprüche 1 bis 8, **dadurch gekennzeichnet, daß** Sensoren (35, 36, 37) zur Messung des Drucks nach dem Bremskraftverstärker (6) und auf der Druckseite der Pumpe (19, 20) vorgesehen sind.

10. Bremsanlage (1) nach einem der Ansprüche 1 bis 9, **dadurch gekennzeichnet, daß** zwei Bremskreise (4, 5) vorgesehen sind, die mit jeweils einer hydraulischen Pumpe (19, 20) versehen sind, und daß nach einem Ausfall des Bremskraftverstärkers (6) beide Pumpen (19, 20) zur Erzeugung einer Bremskraft einsetzbar sind.

11. Verfahren zum Betreiben einer hydraulischen Bremsanlage (1) für ein Kraftfahrzeug, mit einem Bremskraftverstärker (6), einem Antiblockiersystem (12), und einer hydraulischen Pumpe (19, 20), **dadurch gekennzeichnet, daß** ein Ausfall des Bremskraftverstärkers (6) erkannt wird, und daß ein Ventil (27,33;30,34) geschaltet wird, um die Pumpe (19, 20) zur Erzeugung einer Bremskraft zu verwenden.

12. Verfahren nach einem der Anspruch 11, **dadurch gekennzeichnet, daß** nach erkanntem Ausfall des Bremskraftverstärkers (6) der Druck nach dem Hauptzylinder (9) und der Druck auf der Druckseite der Pumpe (19, 20) gemessen wird, und daß in Abhängigkeit davon die Pumpe (19, 20) ein- und ausgeschaltet wird.

## Claims

1. A hydraulic brake system (1) for a motor vehicle, with an anti-lock system (12) that is provided with a hydraulic pump (19, 20) and a brake force booster (6),
**characterized by** an emergency braking system including a means which makes it possible to detect a failure of the brake force booster (6) and valves (30, 34) to connect a suction side of the pump (19, 20) to a master cylinder (9) in order to use the pump (19, 20) to generate brake force after a failure of the brake force booster (6).

2. A brake system (1) according to claim 1,
**characterized in that** the pump (19, 20) can be switched on by means of a sensor or switch (8) after a failure of the brake force booster (6).

3. A brake system (1) according to claim 2,
**characterized in that** the pump (19, 20) can be switched off by means of a sensor or switch (8) after a failure of the brake force booster (6).

4. A brake system (1) according to claim 2,
**characterized in that** the sensor or switch (8) is designed as a pressure sensor.

5. A brake system (1) according to claim 2 or 3,
**characterized in that** the pump (19, 20) can be switched by means of a brake-light switch (8).

6. A brake system (1) according to one of the preceding claims,
**characterized in that** a valve (27, 33) is provided, by means of which the pressure side of the pump (19, 20) can be separated from the master cylinder (9) after a failure of the brake force booster (6).

7. A brake system (1) according to either claim 1 or 6,
**characterized in that** at least one of the two valves (27, 30, 33, 34) is part of a traction control system (13).

8. A brake system (1) according to one of the claims 6 to 7,
**characterized in that** an electric changeover valve that opens when high pressure is applied to it is provided as the valve (27, 30, 33, 34).

9. A brake system (1) according to one of the claims 1 to 8,
**characterized in that** sensors (35, 36, 37) are provided to measure the pressure downstream of the brake force booster (6) and at the pressure side of the pump (19, 20).

10. A brake system (1) according to one of the claims 1 to 9,
**characterized in that** two brake circuits (4, 5) are provided, wherein each has a hydraulic pump (19, 20) respectively, and that both pumps (19, 20) can be used to generate brake force after a failure of the brake force booster (6).

11. A process for operating a hydraulic brake system (1) for a motor vehicle, with such brake system including a brake force booster (6), an anti-lock system (12), and a hydraulic pump (19, 20),
**characterized in that** a failure of the brake force booster (6) is detected, and **in that** a valve (27, 33, 30, 34) is switched to use the pump (19, 20) to generate brake force.

12. A process according to claim 11,
**characterized in that** the pressure downstream of the master cylinder (9) and the pressure on the pressure side of the pump (19, 20) are measured after a failure of the brake force booster (6) is detected, and **in that** the pump (19, 20) is switched on or off depending on the values measured.

## Revendications

1. Système de frein hydraulique (1) pour un véhicule automobile, avec un système d'antiblocage (12) qui est muni d'une pompe hydraulique (19, 20) et d'un frein assisté (6), **caractérisé par** un système de freinage d'urgence avec des moyens pour reconnaître une défaillance du frein assisté (6) ainsi qu'avec des soupapes (30, 34) pour relier un côté d'admission de la pompe (19, 20) à un maître-cylindre (9), pour pouvoir utiliser la pompe (19, 20) après une défaillance du frein assisté (6) pour générer une force de freinage.

2. Système de frein (1) selon la revendication 1, **caractérisé en ce que** la pompe (19, 20) peut être mise en service après une défaillance du frein assisté (6) par un capteur ou un commutateur (8).

3. Système de frein (1) selon la revendication 2, **caractérisé en ce que** la pompe (19, 20) peut être arrêtée après une défaillance du frein assisté (6) par un capteur ou un commutateur (8).

4. Système de frein (1) selon la revendication 2, **caractérisé en ce que** le capteur ou le commutateur (8) est formé en tant que capteur de pression.

5. Système de frein (1) selon la revendication 2 ou 3, **caractérisé en ce que** la pompe (19, 20) peut être commutée au moyen d'un interrupteur d'éclairage stop (8).

6. Système de frein (1) selon l'une quelconque des revendications précédentes, **caractérisé en ce qu'**une soupape (27, 33) est prévue, avec laquelle le côté de refoulement de la pompe (19, 20) peut être séparé du maître-cylindre (9) après une défaillance du frein assisté (6).

7. Système de frein (1) selon la revendication 1 ou 6, caractérisé en qu'au moins une des deux soupapes (27, 30, 33, 34) est un élément d'un système de régulation de patinage (13).

8. Système de frein (1) selon l'une quelconque des revendications 6 à 7, caractérisé en en ce qu'une soupape d'inversion électrique qui s'ouvre contre une haute pression est prévue comme soupape (27, 30 ; 33, 34).

9. Système de frein (1) selon l'une quelconque des revendications 1 à 8, **caractérisé en ce que** des capteurs (35, 36, 37) sont prévus pour mesurer la pression en aval du frein assisté (6) et du côté de refoulement de la pompe (19, 20).

10. Système de frein (1) selon l'une quelconque des revendications 1 à 9, **caractérisé en ce que** deux circuits de freinage (4, 5) sont prévus, lesquels sont prévus respectivement avec une pompe hydraulique (19, 20), et **en ce que** les deux pompes (19, 20) peuvent être actionnées pour générer une force de freinage après une défaillance du frein assisté (6).

11. Procédé pour actionner un système de frein hydraulique (1) pour un véhicule automobile, avec un frein assisté (6), un système d'antiblocage (12) et une pompe hydraulique (19, 20), **caractérisé en ce qu'**une défaillance du frein assisté (6) est reconnue, et **en ce qu'**une soupape (27, 33 ; 30, 34) est actionnée pour pouvoir utiliser la pompe (19, 20) pour générer une force de freinage.

12. Procédé selon la revendication 11, **caractérisé en ce que**, après une défaillance reconnue du frein assisté (6), la pression en aval du maître-cylindre (9) et la pression du côté de refoulement de la pompe (19, 20) est mesurée, et **en ce que** la pompe (19, 20) est activée ou arrêtée en fonction des mesures.
